# EUROPEAN PATENT APPLICATION

(11) **EP 4 530 372 A1**
(43) Date of publication of application: **02.04.2025**
(21) Application number: 23200004.2
(22) Date of filing: 27.09.2023
(51) Int. Cl.: C23C 22/68, C23C 22/73, C02F 5/08

(54) **CARBON DIOXIDE FOR PASSIVATION OF GALVANIZED SURFACES THAT ARE EXPOSED TO WATER DURING OPERATION**

(71) Applicant: L'AIR LIQUIDE, SOCIETE ANONYME POUR L'ETUDE ET L'EXPLOITATION DES PROCEDES GEORGES CLAUDE, 75007 Paris (FR); Air Liquide Belge SA, 1130 Bruxelles (BE)
(72) Inventor: LAMOND, Rudy, 1130 Brussels (BE); BOUSSEMAERE, Roel, 1130 Brussels (BE); Mc NICHOLAS, Paul, 94503 Champigny-Sur-Marne (FR); MARION, Sébastien, 1130 Brussels (BE); ALEXANDERSSON, Thomas, 212 24 Malmo (SE); JANSSENS, Peter, 1130 Brussels (BE)
(74) Representative: Air Liquide

(57) **Abstract**

A process of passivation of galvanized surfaces which are exposed to water, such as in open or closed water circuits where equipments with galvanized surfaces are exposed continuously or intermittently to circulated water solutions, as in cooling towers or evaporative condensers, characterized in that during all or part of the passivation operation, gaseous CO₂ is injected in the water being in contact with the galvanized surface, and in that the CO₂ injection allows to keep the pH of the water in the [7.0, 9.0] range, and preferentially in the [7.0, 8.0] range.

## Description

The present invention relates to the field of galvanized surfaces that are exposed to water, such is the case for example in cooling towers.

The present invention is to be used both in open or closed water circuits where equipments with galvanized surfaces are exposed, continuously or intermittently, to circulated water solutions, as in cooling towers.

Cooling towers are used to cool a liquid, generally water, using a gas, generally ambient air.

Cooling towers are common equipment, present in air conditioning installations, or in industrial and energy processes such as power plants, their function is to evacuate the heat from such installations or processes to the outside.

It can therefore be seen that these cooling towers are most often intended to cool water which has been heated by a source of energy, for example by the condenser present in refrigeration installations.

We can remind that the most frequent construction of such towers has the shape of an hyperboloid : the water to be cooled is brought by a pipe at the top of the tower, water which, from this arrival, is dispersed using a network of pierced ramps, then falls by gravity flow onto a packing creating a large contact surface between the liquid and the air. A flow of air circulates against the water current.

Part of the water will evaporate, causing its temperature to drop.

Among the different types of existing installations, there are open exchangers, where the hot water (the temperature of which depends on the equipment to be cooled, generally 25-40 °C) falls by gravity inside a flow of cool air going up the tower.

The cooled water is collected in a retention basin in the lower part of the tower before returning to the exchanger or the process to be cooled.

A make-up water flow on the towers generally makes it possible to compensate for the loss occurring by evaporation as well as the circuit purge flow.

It is well known that the question of the control of the pH in such cooling waters is a key point, notably in relation to the fact that among the associated risks of such towers is the well-known fact that droplets can transport micro-organisms that have proliferated in the tower, and in particular Legionella, which requires the implementation of cleaning and disinfection actions in order to control the risk of dissemination of such microorganisms.

Bleach-type chlorine or bromine products (hypochlorites) are commonly used for this purpose.

Nevertheless the use of these hypochlorites proves delicate, this for the following reasons: their use increases the pH of the water in which they are added, whereas in a well-known way, the effectiveness of hypochlorites is much greater at pH neutral or very slightly acidic.

This makes it necessary in practice to regulate the pH of the water, typically between 6.5 and 7, or at the very least to adapt the working pH by finding a compromise pH between the materials present and the risk of corrosion and scaling and the lowest possible pH to optimize disinfection.

For this reason, it is known in this field to add an acid to compensate for this phenomenon.

Nevertheless, it is also well known that the addition of such strong acids (such as sulfuric or hydrochloric acids) can lead to the production of very toxic chlorine, which is then generally partly released into the atmosphere.

In this context, the field of application for the present invention is any type of cooling water system or evaporative condenser and particular the cooling tower or evaporative condenser or other type of equipment where galvanized metal surfaces is exposed to recirculated water and where it is important to develop a proper passivation layer on the galvanized surface in order to prevent scaling and corrosion on the galvanized surface in order to prolong the life time of the equipment.

Let's remind that passivation is a treatment process that forms a very thin protective layer that reduces chemical activity with air and water or other material that comes into contact with a surface. The passivation process varies depending on the type of material to be protected and on the substances with which the material comes into contact.

One of the most common circumstances is the passivation for coils and casings for evaporative condensers and cooling towers. Passivation provides maximum protection from corrosion on newly installed evaporative condensers and cooling towers that have hot dipped galvanized steel tube coil surfaces. Hot dip galvanizing produces a coating of zinc-iron intermetallic alloy layers on steel with the outer layer being purely zinc.

The zinc provides cathodic (sacrificial) protection and a physical barrier protection. Passivation helps prevent the development of corrosion that could result in rapid penetration through the zinc coating to the steel. If the corrosion makes it entirely through the protective coating to the carbon steel condenser tubes, they will rapidly corrode. Note that fouling material, such as scale or white rust on the tubes, can hide corrosion on the surface of the tubes.

Corrosion control of galvanized steel depends on forming and maintaining a stable and passive oxide layer on the surface of the galvanized steel during the installation of the equipment.

Passivation is therefore a chemical process that forms a metal oxide bond that enhances the original corrosion resistant, hot dipped galvanized surface by forming a thin transparent oxide coating. It dissolves any embedded or slightly rubbed-in iron pickup on the surface, and reduces the transport of corrosive elements to the underlying metal surfaces.

If the formation of a proper passivation layer on the galvanized surface in the equipment is disturbed and destroyed, corrosion or scaling like formation of white rust can quickly develop within weeks and lead to the need of costly replacement of such equipment.

The present invention is applicable to all types of cooling towers having parts of galvanized steel as they today more often are built by order, leading to a deficient development of the passivation layer due to the short time between production and installation.

Historically, producers of cooling towers have manufactured cooling towers and stored them before being sold. This storage period was sufficiently long so as to observe that a natural development of the passivation layer could occur. Today the lead time has decreased and the production planning has become more efficient, resulting in equipment lacking proper passivation, which has therefore to be developed later on, during the start-up period of every new cooling tower.

In other words, natural passivation during storage in stock gives an efficient passivation layer but is rather costly as a lot of capital is locked up in the stock. So today most manufacturers have pushed the passivation operation over to the customers.

The passivation of galvanized metals is therefore a complicated process that naturally takes from several months up to several years to complete. A galvanized surface that is only exposed to ambient air will react with moisture and oxygen and carbon dioxide and develop a natural passivation layer that goes from elemental zinc to zinc oxide, zinc hydroxide and finally a complex of zinc carbonate and zinc hydroxide. This process is visually seen as the surface of the galvanized material is getting a darker gray appearance as the passivation layer is formed.

As mentioned above, with the streamlining of the production process, galvanized products were built by order and directly shipped to customers instead of being stored in an outside stock. This means that the galvanized product doesn't have formed the natural passivation layer and it is required by the customer to incorporate a passivation plan into their start-up of the equipment. This is usually done by operating the galvanized equipment with reduced load and with strict control of the water chemistry for a time period that could easily extend to 12 weeks or more. The control of the water chemistry is very complex and involves a huge range of chemical products with the aim of corrosion and precipitation control.

Historically chromate was used in order to passivate the surface together with pH control with sulphuric acid. This method was then later on abandoned due to legislation related to the negative environmental impact from chromate.

The industry then started to use different phosphates where orthophosphate was to react with calcium and precipitate this as Ca3(PO4)2 . In addition, zinc and organic additives were formulated in order to overcome problems with calcium phosphate precipitation that could be as severe as calcium carbonate precipitation. This type of chemistry was operationable in a smaller pH-range between pH 6.8 to 7.8 thus leading to the necessity of addition of acid. Increased concern regarding the use of zinc and the eutrophication due to the release of phosphorus into the environment lead to the development of polymers with different functional groups. These functional groups could be carboxylic, amide and sulfonic acids and their function is to distort the crystal structure in the deposits of precipitates and thereby reducing their tendency to stick to surfaces.

This lead to the fact that the formed crystals are more easily detached from the surface. The operational range of the functional group chemistry is higher compared to phosphate based and tolerates a pH up to 9. However operating a cooling water system at this pH increases the risk of formation of white rust. White rust is a zinc rich white porous deposit that corrodes the galvanized steel if left uncontrolled. The chemical composition of white rust is rather similar to the protective oxide layer that is formed during the passivation but the important difference is that passivation creates a dense and dark gray layer that protects the galvanized steel.

White rust is therefore prone to develop in galvanized equipment with improper passivation and/or equipment operated under non-optimal conditions. The experience shows that white rust is formed under the following conditions:
- Increased pH
- High chloride or sulfate concentrations
- High alkalinity and low hardness

If white rust is encountered, measures have to be taken in order to remove the white rust and re-passivate the galvanized steel.

On the other hand, addition of mineral acids in order to adjust the pH to a correct level has a broad range of negative impacts irrespectively if hydrochloric or sulphuric acid is used.

Firstly the addition of mineral acids will increase the salt level in the cooling water, leading to high conductivity and increased risk of corrosion and a need for more frequent water exchange. The wasted part of the cooling water with its high salt content may cause problems later on, even if it is released to municipal treatment or released to a recipient.

The handling of these acids also impose a hazard in the working environment and can also lead to increased cost for service and maintenance of equipment handling the acids.

Addition of these acids also reduces the alkalinity in the water leading to less buffering capacity and bigger fluctuation in pH.

The present invention aims to provide a solution to the technical problems evoked above, allowing:
- to keep the pH of the waters within a defined range without affecting the alkalinity.
- to keep the pH of the waters in a defined range without increasing the concentration of chloride and sulfate and thereby reducing the risks of corrosion.
- to increase the concentration of bicarbonate and carbonate in the cooling waters, which is necessary for the formation and preservation of a passivated layer on the surface of galvanized metals exposed for the cooling water.
- to ensure the formation of a passivation layer on a new equipment during at least the first 24 months of operation.
- to prolong operation and minimize the blowdown due to high conductivity.

As will be seen in more details in the following description, the present invention implements a solution offering an alternative approach to the solutions of the prior art, through the injection of gaseous CO₂ in the water with which the galvanized surface is in contact, in defined conditions, allowing the following achievements :
- the injection of carbon dioxide keeps the pH in an optimal range for development of the passivation layer without increasing the concentration of sulfate or chloride.
- the injection of carbon dioxide maintains the alkalinity in the cooling water leading to proper conditions for passivation of the galvanic surface.
- the injection of carbon dioxide allows not increasing the eutrophication in the environment from blow-down water.
- the use of carbon dioxide and the lowering of the pH will change the equilibrium of bicarbonates and carbonates toward a situation where precipitation of calcium carbonate will be less probable.

Carbon dioxide will produce carbonic acid when dissolved in water. It does not contain any anions like chloride or sulfate, which accelerates the corrosion. Using mineral acids for controlling the pH will give increased concentrations of chloride or sulfate. The solution to overcome the risk of corrosion is to perform a blow-down, in which some of the cooling water is replaced by fresh water. The anions originating from carbonic acid are dependent on the pH and can be bicarbonate or carbonate ions. These don't have this stimulating effect on corrosion as chlorides and sulfates have and the frequency of blow-down can be substantially lowered. Mineral acids are really strong acids and their use will decrease the alkalinity of the water, which will lower the buffering capacity of the water and make the process of stabilizing the pH more unstable. Carbon dioxide is a much weaker acid and will not affect the alkalinity resulting in high buffering capacity and a more stable pH controllability.

In the operation of the cooling tower; free carbon dioxide in the water is stripped off to the atmosphere. This has a negative impact on the passivation surface of the galvanized steel and increases the risk for formation of white rust and corrosion. By using carbon dioxide for control of pH in the cooling water this lost free carbon dioxide is replenished to the water and thereby promoting conditions favoring formation and conservation of the passivated layer on the galvanized steel surface.

To summarize, the use of CO₂ according to the present invention is done to control the pH for passivation reasons, for the start-up and if required for repassivation in time, it's not linked to the approaches of the known art of disinfection or anti-scaling, other problematics attached to cooling towers with are well known to the skilled man.

Thanks to the invention, by creating the right circumstances with CO₂, we induce the formation of zinc carbonates and we reduce the water use and chemical use which are normally required during passivation.

Experimentations have been made by the Applicant in the field of the cooling towers implemented in combination with on-site nitrogen generation plants (distillation), showing that the use of CO₂ according to the present invention allows the following results and advantages :
- The pH in the circulating water, immediately after implementation of the CO₂ injection, enters the required range and is under control, and therefore also the passivation process that is preliminary for a long life guarantee of the equipment.
- A huge drop in the water consumption has been observed, the refreshment of this cooling water was not as frequently needed as it was before.
- A lower volume of chemicals is used.

## Claims

1. A process of passivation of galvanized surfaces which are exposed to water, such as in open or closed water circuits where equipments with galvanized surfaces are exposed continuously or intermittently to circulated water solutions, as in cooling towers or evaporative condensers, **characterized in that** during all or part of the passivation operation, gaseous CO₂ is injected in the water being in contact with the galvanized surface, and **in that** the CO₂ injection allows to keep the pH of the water in the [7.0, 9.0] range, and preferentially in the [7.0, 8.0] range.

2. The process of claim 1 **characterized in that** the galvanized surfaces to be passivated are surfaces present in a cooling tower and **in that** the passivation operation is part of a passivation plan organized by the site operating said cooling tower during the start-up of the tower.

3. The process of claim 1, **characterized in that** the galvanized surfaces to be passivated are surfaces present in a cooling tower and **in that** the passivation operation is a repassivation operation organized during the lifetime of the tower.

4. A method of operating an equipment having galvanized surfaces which are exposed continuously or intermittently to circulated water solutions, for example a cooling tower or an evaporative condenser, the method comprising carrying out at least one step of passivation of said galvanized surfaces, **characterized in that** during all or part of the passivation step, gaseous CO₂ is injected in the water being in contact with the galvanized surface, and **in that** the CO₂ injection allows to keep the pH of the water in the [7.0, 9.0] range, and preferentially in the [7.0, 8.0] range.

5. The method of claim 4 **characterized in that** the equipment operated is a cooling tower and **in that** the passivation operation is part of a passivation plan organized by the site operating said cooling tower during the start-up of the tower.

6. The method of claim 4 **characterized in that** the equipment operated is a cooling tower and **in that** the passivation operation is a repassivation operation organized during the lifetime of the tower.
